# EUROPEAN PATENT APPLICATION

(11) **EP 1 548 621 A1**
(43) Date of publication of application: **29.06.2005**
(21) Application number: 03029403.7
(22) Date of filing: 19.12.2003
(51) Int. Cl.: G06F 17/60, G05B 19/00

(54) **Recipe editing interface**

(71) Applicant: SAP Aktiengesellschaft, 69190 Walldorf (DE)
(72) Inventor: Scholl, Juergen, 75015 Bretten (DE); Toebben, Stephan, 69190 Walldorf (DE)
(74) Representative: Cohausz & Florack

(57) **Abstract**

The invention relates to a computer-implemented method, computer program, computer program product, display and computer for providing a recipe editing interface within one single view. To allow displaying recipe process stages and different formulae within one single interface, it is proposed to retrieve at least one recipe from a database, extract from said recipe process stages and respective formulae, display said formulae for said respective process stages within said single view, read value inputs for ingredients of said formulae, calculate a relative amount of said ingredients with respect to said output amount, respectively, and display said relative amount within said single view.

## Description

### FIELD OF THE INVENTION

The invention relates to a computer-implemented method for providing a recipe editing interface within one single view. The invention also relates to a computer program as well as a computer program product for providing a recipe editing interface within one single view. The invention further relates to a computer for providing a recipe editing interface within one single view. Eventually, the invention relates to a display providing a recipe editing interface within one single view.

### BACKGROUND

Product innovation and renovation are part of a product life cycle management. During product development, trial management has to be applied to optimise the respective production process from the first prototype on bench scale up to industrial production.

When carrying out product development, trials are carried out for testing a product.

A trial is an action for testing a product in order to achieve the required product quality/specification.

During pilot plant phases, a trial allows finding product specifications for a product on a defined product line at optimal cost. More specifically, a trial is the manufacture of a product by using a recipe. A recipe may consist of formula, processing conditions, quality inspection parameters, in-process control, and equipment specification. Not all of these parameters are required. A recipe also allows the subsequent evaluation of all trial results. The trial may be carried out on a bench scale, pilot plant scale, or industrial scale.

When defining a trial for product evaluation, a recipe is defined within a recipe management (RM)system. This recipe management system provides data structures for recipes. Within a recipe, a formula for a certain product, e.g. which ingredients are necessary, may be defined, and required theoretical calculations on nutrient properties may be carried out. Furthermore, a process flow may be modelled. This may be supported by a building block approach. Process templates provide the appropriate functionality. In addition, a recipe allows specifying equipment requirements, and process parameters necessary for production.

When designing a production process, and a new product, formulae editing in a current system allows displaying several production stages within only one view. It is also possible to display several formulae within one view, but only for one production stage.

However, a product developer wants to test different formulae for a recipe, e.g. different compositions of ingredients. The product developer also might want to see the effect of changes of ingredient values with respect to the overall output.

As a trial may comprise various production stages, the formulae for all stages should be presented within one view, so that the product developer may see, which ingredients, or process steps are included during the entire production cycle. Also, process steps and the respective ingredients, may vary for different trials. Therefore, the product developer might want to see the respective results for at least two trials within one view.

Current systems do not provide an editing interface wherein different trials with their respective process stages are presented within one single view.

### SUMMARY

The invention therefore proposes a computer-implemented method for providing a recipe editing interface within one single view, with the steps of retrieving at least one recipe from a database, extracting from said recipe process stages and respective formulae, displaying said formulae for said respective process stages within said single view, reading value inputs for ingredients of said formulae, calculating a relative amount of said ingredients with respect to said output amount, respectively, and displaying said relative amount within said single view.

According to the inventive method, recipes for processes are stored in a database and may be retrieved for visualisation. These recipes comprise information about formulae of process stages. Also, certain process parameters may be comprised within a recipe. These process parameters define possible production processes together with their respective settings.

To provide available and necessary information within one view, the respective process stages, and formulae are extracted from the recipe. The formulae define which ingredients should be included into the product within a certain process stage.

To give the product developer an overview about which ingredients are within a product, and when they are added to the product, said formulae for said respective process stages are displayed within said single view. In case a process stage comprises a plurality of recipes, these may also be presented within the single view.

For editing said recipes, value inputs for said ingredients are read. These value inputs define input amounts for certain ingredients. The input amounts may be in the unit of measure of the respective ingredient.

To give the product developer an impression about how a change within a value for one ingredient affects the overall output, a relative amount of said ingredients with respect to said output amount is calculated for each ingredient, respectively. This relative amount may be displayed within the single view. This overall amount may be calculated for the respective ingredient within a certain process stage or for the respective ingredient within all process stages.

By providing the inventive method, a product developer may see, within one single view, all process stages of a production process together with the respective formulae and ingredients. The values for the respective ingredients are displayed and editable. Editing values results in a change of the relative amount of the respective ingredient, which may also be immediately calculated, and presented.

The inventive method allows editing recipes and estimating the overall effects of the editing process on the output product. It may also be possible, to view multiple recipes of a process hierarchy within one view. Also, parallel view on recipe modifications may be possible.

To get a good impression about how changes of values for ingredients affect the output product, it is proposed that said relative amount of said ingredients is calculated as a mass and/or volume percentage, respectively. It is further proposed that the relative amount of ingredients is displayed within a separate column. This separate column is also displayed within said single view. By providing this information, a product developer sees immediately, which ingredient makes up which fraction of the overall product. Also, the substance of the ingredients and nutrient information, such as vitamins, fat, carbohydrates, trace elements and their relative amounts may be presented in different columns. They also may be presented in new windows.

As a product development process is carried out within trials, each trial being stored in a trial object, it is proposed that said recipes are stored within trial objects, said trial objects are retrieved from said database, and the respective recipes are presented within said single view for at least two trial objects. According to this embodiment, the single view does not only show formulae of a recipe for different process stages, but moreover does visualise various recipes of different trials within one single view. Manipulation of values for ingredients is possible in case value inputs are read from user inputs. These user inputs may be from keyboard entries, or any other inputs. By reading the user inputs, it is possible to manipulate ingredient values for different formulae. In addition, the effect on the overall product may directly be seen.

It is also possible that trials already have been carried out. For these trials, the formulae already comprise ingredient values. To show these values, and to make comparison between former and current trial possible, it is proposed that said trial objects comprise values for said ingredients, and that said value inputs are read from said trial objects. In this case it may be possible that, for instance, for one trial, the value inputs are read from a trial object, e.g. a finish trial, whereas for a current trial value inputs from a user input may be read. By that, two or more trials may be compared with each other.

To allow process planning, and product development with regard to materials, operations, and actions, it is proposed that said recipe comprises material, operation, and action information, and that this information is retrieved from said recipe prior to presenting it within the single view. The single view may then not only comprise information about material, e.g. ingredients, but also about process steps, such as operations and actions carried out on the ingredients. A product developer may then not only see the ingredients, but also the different process steps carried out for production. After retrieving this information, it is proposed that it is also displayed within said single view.

To edit formulae and recipes, it is necessary to store the results after a user input has altered the formulae. Therefore, it is proposed that said value inputs are read from said single view, and stored within a recipe of a trial object for process definition. By that, a product developer may define values for ingredients, operations, and actions, which are then processed to be stored within a recipe of a new trial object. This new trial object may then be used for carrying out bench scale, pilot plant scale or factory scale trials.

To allow an overview of the output amounts for different process stages, it is proposed that an output amount for each process stage is calculated, respectively. It is also proposed that the calculated output amount for each process stage is displayed.

When editing a formula, it might be helpful to know the affect of changes on the overall output amount of a product. Therefore, it is proposed that an output amount for each recipe is calculated, respectively. It is also proposed that the calculated output amount is displayed within the single view, separately.

According to a further embodiment, it is proposed that said output amount is calculated, taking process losses and evaporation into account. During production, material losses and water evaporation may occur. The effects of these losses may also be taken into account when calculating the overall output amount of a product.

To allow generating a new trial object easily, without the need for manual input of all ingredient values, or process parameters, it is proposed that values of a first trial objects are copied into a second trial object displayed within said single view. The product developer may then create a new trial object by for instance, using drag-and-drop technology, as the first trial object is already displayed on the single view.

As for certain processes target values of ingredients are necessary, it is proposed that said target values for said ingredients retrieved from said trial objects are displayed. Said target values may also comprise a range of values, defined by minimum and maximum values. It is also proposed that ingredient minimum and/or maximum values retrieved from said trial object are also displayed. This display is also done using the single view.

To check, whether the'actual ingredient values are possible or fit into target value setting, a consistency check for said input ingredient values is carried out.

To allow not only adjusting ingredient values, but also process parameters, it is proposed that target process parameters retrieved from said trial object are displayed, and that process parameter minimum and/or maximum values retrieved from said trial object are displayed.

Another aspect of the invention is a computer program for providing a recipe editing interface within one single view, operable to cause a processor to retrieve at least one recipe from a database, extract from said recipe process stages and respective formulae, display said formulae for said respective process stages within said single view, read value inputs for ingredients of said formulae, calculate a relative amount of said ingredients with respect to said output amount, respectively, and display said relative amount within said single view.

A further aspect of the invention is a computer program product for providing a recipe editing interface within one single view, with a computer program stored thereon operable to cause a processor to retrieve at least one recipe from a database, extract from said recipe process stages and respective formulae, display said formulae for said respective process stages within said single view, read value inputs for ingredients of said formulae, calculate a relative amount of said ingredients with respect to said output amount, respectively, and display said relative amount within said single view.

Another aspect of the invention is a display providing a recipe editing interface within one single view wherein said single view is created by retrieve at least one recipe from a database, retrieving a recipe from a database, extracting from said recipe process stages and respective formulae, displaying said formulae for said respective process stages within said single view, reading value inputs for ingredients of said formulae, calculating a relative amount of said ingredients with respect to said output amount, respectively, and displaying said relative amount within said single view.

Eventually, a further aspect of the invention is a computer for providing a recipe editing interface within one single view, comprising retrieving means to retrieve at least one recipe from a database, extraction means to extract from said recipe process stages and respective formulae, display means to display said formulae for said respective process stages within said single view, data retrieval means to read value inputs for ingredients of said formulae, computing means to calculate a relative amount of said ingredients with respect to said output amount, respectively, and said display means are arranged to display said relative amount within said single view.

Further advantages results from the dependent claims.

Referring now to the drawings, in which like numerals represent like elements throughout the several figures, aspects of the present invention and the exemplary operating environment will be described.

### BRIEF DESCRIPTION OF THE DRAWINGS

In the drawings show:
- Fig. 1: a block diagram of a computer system;
- Fig. 2: a flowchart of an inventive method;
- Fig. 3: a diagram of a recipe data sheet;
- Fig. 4: a screenshot for formulae maintenance;
- Fig. 5: a screenshot showing a recipe for various process steps and various trial objects;
- Fig. 6: a screenshot of a recipe with target values for ingredients;
- Fig. 7: a recipe with target values for process stages.

### DETAILED DESCRIPTION

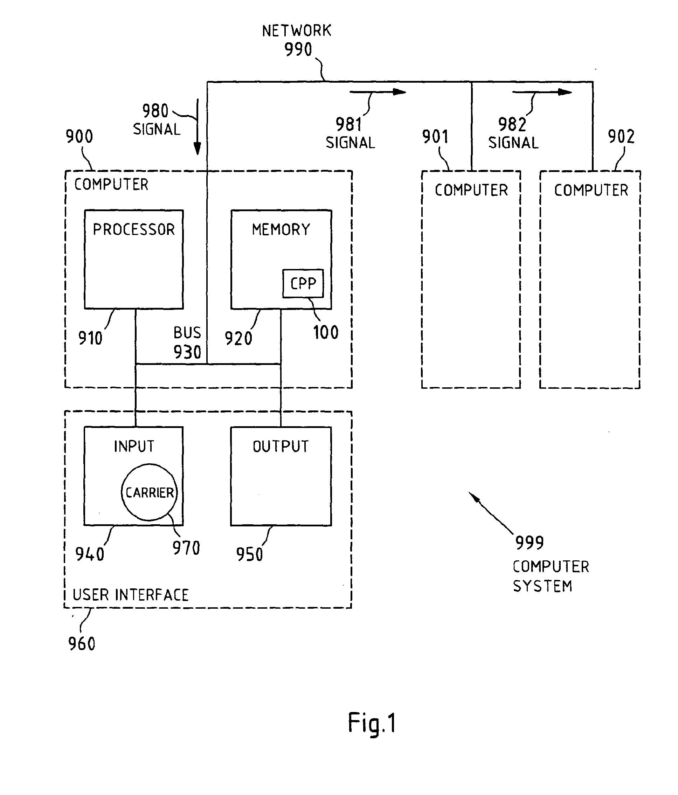

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.
Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialise in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-read (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

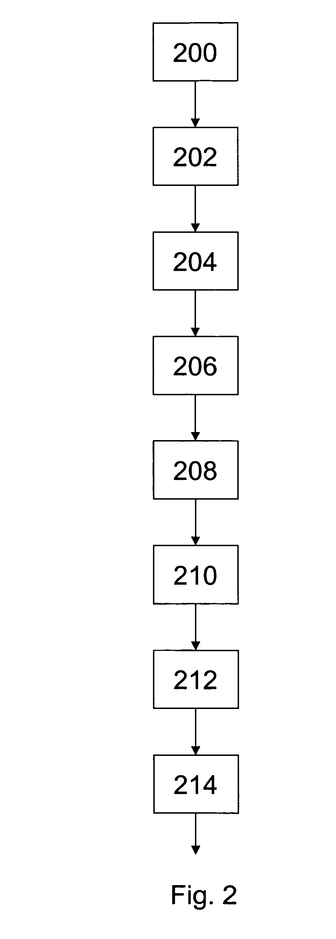

Figure 2 depicts diagrammatically a flowchart of an inventive method. To allow displaying recipes together with their formulae within one single view, the respective recipe has to be loaded from a database (200). After loading the recipe from the database (200), relevant information, such as process stages, and formulae, are extracted from the loaded recipe (202).

The retrieved information comprises process stages together with the respective formulae. This information is displayed within a single view (204).

As the inventive method allows creating and editing recipes for new trial objects, in a next step a new trial object is created (206). This may be done by selecting within the single view the already loaded recipe, and copying it, for instance, by a drag-and-drop procedure to a new column. By this a new object may be created. To provide values for the newly created trial object, they may be copied from an existing trial object (208).

To allow editing the ingredient values, or to add new ingredients to a recipe, user inputs are read (210).

These user inputs cause changes in the composition of the recipe. Therefore, the relative amounts for certain ingredients are calculated immediately after a user input, and displayed in a separate column (212). The product developer thus may see immediately, which are the effects of changing ingredient values. In addition, the overall amount, and an output amount of a process stage may be calculated, and displayed (212).

After having carried out all maintenance and editing work to the newly created trial object, this object may be stored within the database (214). It may also be possible, to edit the trial object, which has been loaded in step 200. The old values of this object may be overwritten by the new values. The database thus provides access to editable recipes. The results of editing the recipe may be presented within a single view. Furthermore, two or more trial objects, e.g. their recipes, may be compared with each other by presenting them within the single view.

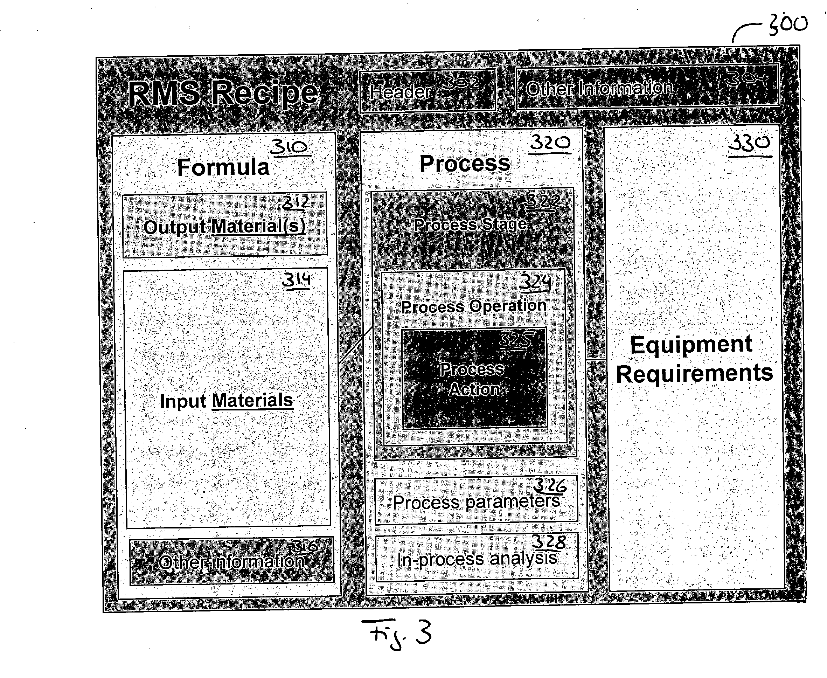

Figure 3 depicts a recipe data sheet of a recipe management. This recipe management and its respective data sheets may be used to design and develop recipes. It allows providing information to design formulae, running required theoretical calculations on nutrient properties, modelling the process supported by a building block approach, and specifying the equipment requirements and process parameters necessary for production.

The data sheet 300 comprises a header 302 and further information 304. The header 302 comprises information about the type of recipe, its name, its associated trial object, language information, trial group, trial number, project number, and further relevant information for administration. Other information 304 may comprise any information which might be helpful for administrating the data sheet 300.

Within a recipe, a formula 310, a process 320, and equipment requirements 330 are defined.

The formula 310 comprises information about output materials 312 and input materials 314. These are information about the ingredients as well as the amounts, nutrient properties and further material specific information. Input materials 314 may be specified by structured specification objects and a material master. Other information 316, which is related to the formula 310, may also be stored within the formula 310.

Besides the formula 310, the recipe data sheet 300 comprises process information 320. The process information comprises process stages 322, which are built by process operations 324, and process actions 325.

Also, process parameters 326 and in-process analysis results 328 may be stored. A process stage 322 comprises different operations 324. These operations may be defined by process actions 325. To carry out the recipe, the process actions 325 may have to be within certain process parameters 326. Results of the process may be analysed and stored within in-process analysis results 328.

Within the recipe 300, also equipment requirements 330 may be stored. These equipment requirements 330 define which equipment is necessary to carry out the process 320 with the respective formula 310.

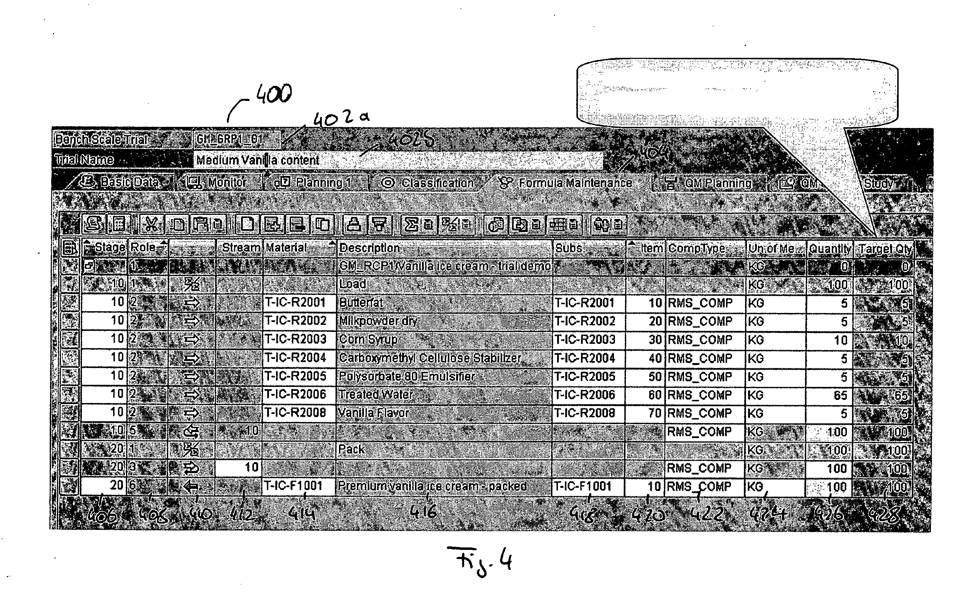

Figure 4 depicts a screenshot of a formula maintenance screen. The header of the screen comprises information about the respective trial object with its number 402a and its trial name 402b. A tab strip 404 allows selecting formula maintenance. Within this tab strip 404, a formula is depicted in a table. The table comprises various columns 406-428 and rows.

Column 406 comprises information about the current process stage. These stages may be labelled by numbers, each number related to a different stage. Depicted are stages 10, and 20, wherein stage 10 is a production stage, and stage 20 is a shipping stage.

Column 408 comprises information about a user role, defining which users may edit the respective row.

Column 410 comprises icons depicting the action carried out on the respective ingredient in the respective row.

Column 412 gives information about product movements during processing the recipe.

Column 414 comprises ID information for the respective ingredients.

Column 416 shows information about the respective ingredient.

The information about the ingredient is again depicted in column 418.

Column 420 depicts item information. This information comprises item numbers. These item numbers may be used for numbering different items within one formula.

Column 422 comprises information about the type of ingredient of the respective row.

Column 424 comprises information about the unit of measurement (UoM).

Column 426 comprises information about the quantity of respective ingredients for the initial formula.

Column 428 depicts the resulting target quantity, when the trial recipe formula is maintained. By that, changes of one quantity of one ingredient may be used for calculating the quantity of all other ingredients based on the initial formula and what the target quantity will be.

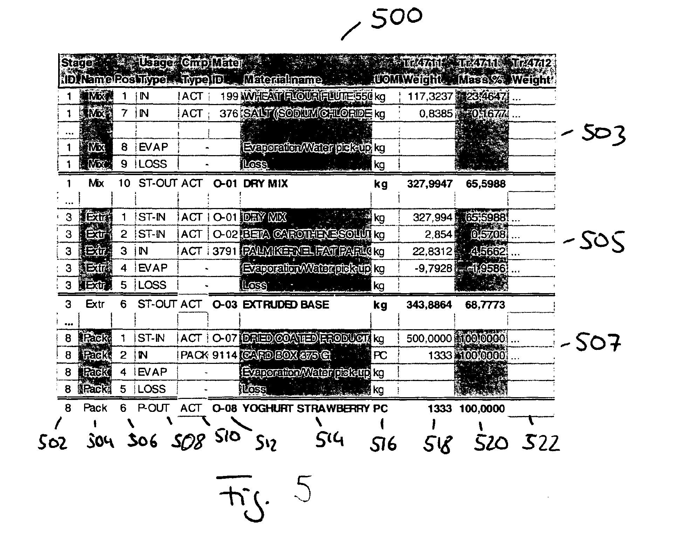

Figure 5 depicts a screenshot 500 of a single view, showing various recipes within various process stages.

The table comprises various rows, whereby some rows are grouped to build a process step. Depicted are three process steps 503, 505, and 507. The first process step 503 comprises mixing of ingredients. The second process step 505 comprises further processing of the trial mix, and process step 507 comprises packaging of the extruded product.

The product stages 503-507 are defined by formulae, which again are defined by certain ingredients. In column 502, a stage ID is depicted. This stage ID refers to the respective process stage 503, 505, and 507.

Column 504 comprises process stage names. These names refer to the respective process stage 503, 505, and 507.

Column 506 comprises a position number of the respective ingredient or process within one process stage.

Column 508 comprises a short description of the type of process carried out on the respective material.

Column 510 comprises information about a component type.

Column 512 comprises a material ID identifying the respective material.

Column 514 comprises a description of the material or process.

Column 516 comprises a unit of measurement (UoM).

Column 518 comprises a quantity value of the respective ingredient. These quantity values are summed up for each process stage 503, 505, and 507. The mass percentages of the respective ingredient are depicted in column 520.

Columns 518 and 520 depict a formula for one trial object. Depicted is the trial object 4711. A further trial object, numbered 4712, may be also shown in following columns 522. These columns are editable and different quantity values may be input. The effects of these inputs are calculated on base of a mass percentage, and depicted in a further column (not depicted).

The screenshot 500 depicts various process stages for various trial objects together with their formulae. A product designer may thus see all necessary information within one view.

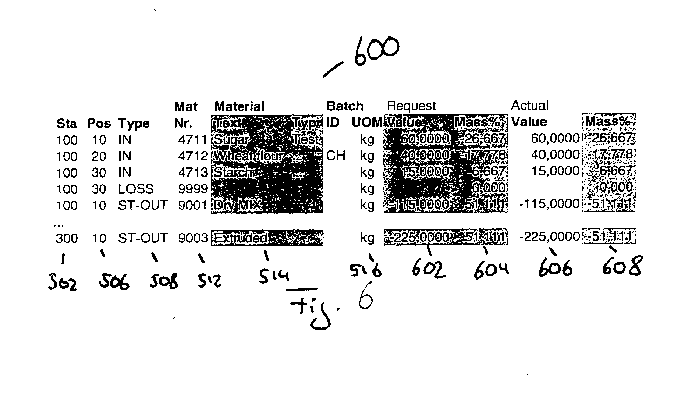

Figure 6 depicts a screenshot 600 with target values and actual values.

The columns 502-516 comprise the same information as depicted in Figure 5.

Column 602 comprises information about a requested target value and column 604 comprises the mass percentage information of this ingredient.

Column 606 depicts actual values for certain ingredients and their respective mass percentages are depicted in column 608.

As can be seen within screenshot 600, requested, and actual values may be compared. A trial may be carried out, and actual values may be input. These may be compared with requested target value inputs.

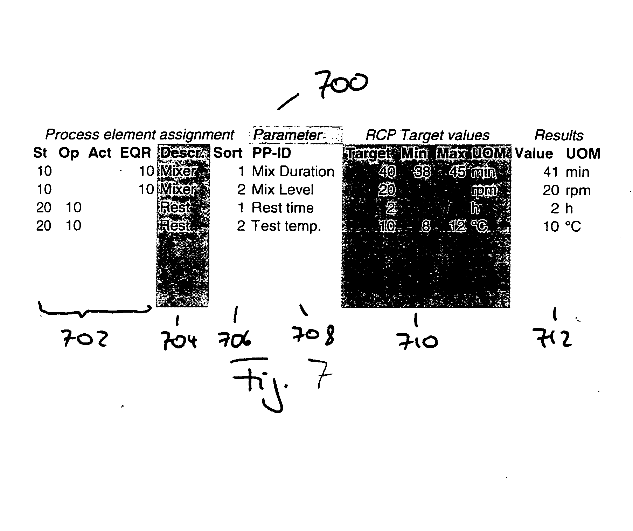

Figure 7 depicts a screenshot with process parameters. Column 702 comprises administration information for the respective actions.

Column 704 comprises a process description. Column 706 comprises information about the succession of the respective processes.

Column 708 comprises detailed information about the respective process.

Columns 710 comprise information about the recipe target values. These target values may also comprise minimum and maximum values. Together with the target values, the unit of measurement may be depicted. Columns 710 may be used to check whether actual values are within target values.

Column 712 comprises information about actual values for the respective processes. These actual values may be input during a trial. The product developer may compare the actual values in column 712 with the target values in columns 710.

By providing the inventive method, information about products, recipes, formulae and processes may be depicted within one single view. Different trials may be compared and formulae may be tried out. Effects of changes may be seen immediately within the single view.

### REFERENCE NUMBERS

- 100: Computer program product
- 200: Load recipe
- 202: Extract process stages + formulae
- 204: Display object
- 206: Create new trial object
- 208: Copy information into new object
- 210: Read user input
- 212: Calculate relative amounts, display
- 214: Store new object
- 300: Data sheet
- 310: Formula
- 312: Output material
- 314: Input material
- 316: Other information
- 320: Process
- 322: Process stages
- 324: Process operation
- 325: Process actions
- 326: Process parameters
- 328: In-process analysis
- 400: Screenshot
- 402: Trial information
- 404: Tab strip
- 406: Stage column
- 408: Role column
- 410: Icons column
- 412: Stream column
- 414: Material ID column
- 416: Material description column
- 418: Material ID column
- 420: Item ID column
- 422: Component Type column
- 424: Unit of Measure column
- 426: Quantity column
- 428: Target quantity column
- 500: Screenshot
- 502: Stage ID column
- 503: Mix stage
- 504: Stage name column
- 505: Extruder stage
- 506: Position column
- 507: Packaging stage
- 508: Type column
- 510: Component type column
- 512: Material ID column
- 514: Material name column
- 516: Unit of Measurement column
- 518: Weight column
- 520: Mass percentage column
- 522: Weight column
- 600: Screenshot
- 602: Target value column
- 604: Target mass percentage column
- 606: Actual value column
- 608: Actual mass percentage column
- 700: Screenshot
- 702: Admin information column
- 704: Process description column
- 706: Sorting column
- 708: Detail information column
- 710: Target value columns
- 712: Actual value columns
- 900: Computer
- 910: Processor
- 920: Memory
- 930: Bus
- 940: Input device
- 950: Output device
- 960: User interface
- 970: Program carrier
- 980: Program signal
- 990: Computer network
- 999: Computer network system

## Claims

1. A computer-implemented method for providing a recipe editing interface within one single view, with the steps of:
retrieving at least one recipe from a database, extracting from said recipe process stages and respective formulae,
displaying said formulae for said respective process stages within said single view,
reading value inputs for ingredients of said formulae,
calculating a relative amount of said ingredients with respect to said output amount, respectively, and
displaying said relative amount within said single view.

2. The computer-implemented method of claim 1, wherein said relative amount of said ingredients is calculated as a mass and/or volume percentage, respectively.

3. The computer-implemented method of claim 2, wherein said relative amount of ingredients is displayed within a separate column.

4. The method of any one of claims 1 to 3, wherein said recipes are stored within trial objects, said trial objects are retrieved from said database, and the represented recipes are presented within said single view for at least two trial objects.

5. The computer-implemented method of any one of claims 1 to 4, wherein said value inputs are read from user inputs.

6. The computer-implemented method of any one of claims 1 to 5, wherein said trial objects comprise values for said ingredients, and said value inputs are read from said trial objects.

7. The computer-implemented method of any one of claims 1 to 6, wherein said recipe comprises material, operation, and action information, and wherein this information is retrieved from said recipe prior to presenting it within the single view.

8. The computer-implemented method of claim 7, wherein said material, operation, and action information is displayed within said single view.

9. The computer-implemented method of any one of claims 1 to 8, wherein said value inputs are read from said single view, and stored within a recipe of a trial object for process definition.

10. The computer-implemented method of any one of claims 1 to 9, wherein an output amount for each process stage is calculated, respectively.

11. The computer-implemented method of claim 10, wherein an output amount for each process stage is displayed, separately.

12. The computer-implemented method of any one of claims 1 to 11, wherein an output amount for each recipe is calculated, respectively.

13. The computer-implemented method of claim 12 to, wherein an output amount for each recipe is displayed, separately.

14. The computer-implemented method of any one of claims 12 or 13, wherein said output amount is calculated, taking process losses and evaporation into account.

15. The computer-implemented method of any one of claims 1 to 14, wherein values of a first trial object are copied into a second trial object displayed within said single view.

16. The computer-implemented method of any one of claims 1 to 15, wherein a target value for said ingredients retrieved from said trial object is displayed, and wherein ingredient minimum and/or maximum values retrieved from said trial object are displayed.

17. The computer-implemented method of any one of claims 1 to 16, wherein a consistency check for said input ingredient values is carried out.

18. The computer-implemented method of any one of claims 1 to, wherein target process parameters retrieved from said trial object are displayed, and wherein process parameter minimum and/or maximum values retrieved from said trial object are displayed.

19. A computer program for providing a recipe editing interface within one single view, operable to cause a processor to retrieve at least one recipe from a database, extract from said recipe process stages and respective formulae,
display said formulae for said respective process stages within said single view,
read value inputs for ingredients of said formulae, calculate a relative amount of said ingredients with respect to said output amount, respectively, and display said relative amount within said single view.

20. A computer program product for providing a recipe editing interface within one single view, with a computer program stored thereon operable to cause a processor to retrieve at least one recipe from a database, extract from said recipe process stages and respective formulae,
display said formulae for said respective process stages within said single view,
read value inputs for ingredients of said formulae, calculate a relative amount of said ingredients with respect to said output amount, respectively, and display said relative amount within said single view.

21. A display providing a recipe editing interface within one single view wherein said single view is created by retrieving at least one recipe from a database, extracting from said recipe process stages and respective formulae,
displaying said formulae for said respective process stages within said single view,
reading value inputs for ingredients of said formulae,
calculating a relative amount of said ingredients with respect to said output amount, respectively, and
displaying said relative amount within said single view.

22. A computer for providing a recipe editing interface within one single view, comprising retrieving means to retrieve at least one recipe from a database,
extraction means to extract from said recipe process stages and respective formulae,
display means to display said formulae for said respective process stages within said single view, data retrieval means to read value inputs for ingredients of said formulae,
computing means to calculate a relative amount of said ingredients with respect to said output amount, respectively, and
said display means are arranged to display said relative amount within said single view.
